# EUROPÄISCHE PATENTSCHRIFT

(11) **EP 1 523 381 B1**
(45) Veröffentlichungstag und Bekanntmachung des Hinweises auf die Patenterteilung: **23.09.2015**
(21) Anmeldenummer: 03730118.1
(22) Anmeldetag: 26.05.2003
(51) Int. Cl.: B01J 8/18

(54) **VERFAHREN ZUM EINLEITEN VON GAS IN EIN FLIESSBETT**
PROCESS FOR INTRODUCING A GAS INTO A FLUIDISED BED AND METHOD FOR THEREFOR
PROCEDE POUR INTRODUIRE UN GAZ DANS UN LIT FLUIDISE ET PROCEDE ASSOCIE

(30) Priorität: 18.07.2002 DE 10232789
(43) Veröffentlichungstag der Anmeldung: 20.04.2005
(73) Patentinhaber: Vinnolit GmbH & Co. KG, 85737 Ismaning (DE)
(72) Erfinder: KREJCI, Klaus, 84489 Burghausen (DE); KAMMERHOFER, Peter, 84508 Burgkirchen (DE); MIELKE, Ingolf, 84508 Burgkirchen (DE); WÄTERLING, Uwe, 84518 Garching (DE)
(74) Vertreter: Forstmeyer, Dietmar
(86) Internationale Anmeldenummer: PCT/EP2003/005514
(87) Internationale Veröffentlichungsnummer: WO 2004/009228

(56) Entgegenhaltungen:
- DE-A- 2 846 350
- DE-A- 4 305 001
- FR-A- 2 080 666
- US-A- 3 466 021
- US-A- 4 659 455
- US-B1- 6 199 835

## Beschreibung

Die Erfindung betrifft ein Verfahren zur Oxichlorierung von Ethylen zu 1,2-Dichlorethan mittels eines Fließbettreaktors.

Fließbettreaktoren umfassen üblicherweise eine Schüttung eines feinkörnigen Feststoffs, der für die durchzuführende Reaktion gewöhnlich als Katalysator wirkt. Die Stoffe, die in dem Reaktor zur Reaktion gebracht werden, sind in den allermeisten Fällen Gase, genauso wie die Reaktionsprodukte, die den Reaktor am Kopf verlassen. Das Einleiten und Mischen der Reaktanden geschieht im unteren Teil des Reaktors, insbesondere oberhalb und/oder unterhalb des Fließbetts. Eine wichtige Rolle für die optimale Gestaltung der Reaktion spielen hierbei Gaseinleitungs- und Verteilungssysteme, mit denen die Reaktanden gemischt und mit dem Katalysator in Kontakt gebracht werden. Das Fließbett wird durch die eingeleiteten Gase bzw. durch Inertgase in einem Schwebezustand gehalten und besitzt dadurch flüssigkeitsähnlichen Charakter. Dies erleichtert bei exothermen Reaktionen die Abführung der Reaktionswärme an Kühlmedien, die z.B. in hierfür besonders geeigneten Einbauten, wie Rohrleitungen, im Reaktor zirkulieren. Andererseits:können endotherme Reaktionen durch spezielle Beheizungsvorrichtungen unterstützt werden, wofür beispielsweise Heizpaneelen eingesetzt werden.

Nachdem die gasförmigen Reaktanden durch das Fließbett geleitet wurden, führt der das Fließbett verlassende Gasstrom Fließbettpartikel mit sich, die aus ökonomischen und ökologischen Gründen abgeschieden und dem Fließbett wieder zugeführt werden müssen. Geeignete Vorrichtungen zum Rückhalten der Fließbettpartikel sind beispielsweise Fliehkraftabscheider und Filter. Trotzdem gelingt es in den meisten Fällen nicht, sämtliche Fließbettpartikel abzuscheiden, wobei insbesondere feinkörnige Partikel (z. B. Katalysatorstaub) verloren gehen. Der mit dem Verlust von Fließbettpartikeln einher gehende Katalysatorverlust stellt daher eine erhebliche wirtschaftliche Beeinträchtigung dar. Darüber hinaus haben Katalysatoren oftmals toxische Eigenschaften oder sie schädigen die Umwelt, so dass ihre Abtrennung und Isolierung von den Reaktionsprodukten einen erheblichen Aufwand verursachen kann.

Aus oben genannten Gründen folgt, dass es vorteilhaft ist, die Bildung feinkörniger Partikel so umfassend als möglich zu unterbinden.

Dokument DE4305001 offenbart ein Verfahren zur Herstellung von 1, 2-Dichlorethan mittels eines Fliessbettreaktors, der mit einer Vorrichtung zum Einleiten von Gas in ein Fliessbett mit unterhalb des Fliesbetts befindlichen Gaseinleitungsrohren ausgestattet ist, wobei die Gaseinleitungsrohre an ihrer Mündung Gasverwirbelungsmittel aufweisen, bei welchem Verfahren Ethen, Sauerstoff und/oder Chorwasserstoff in das einen Katalysator aufweisende Fliessbett eingeleitet werden, bei den unterhalb des Fliessbetts angeordneten Gaseinleiteungsrohren der Gasstrom mit einer mittleren Austrittsgeschwindigkeit im Bereich von 75,9 kg/h.

Es ist bekannt, daß die Bildung feinkörniger Partikel hauptsächlich auf Mahl- und Reibvorgängen innerhalb des Fließbetts, an den Kühlrohren und der Reaktorwand beruht, oder durch die Gaseinleitung bedingt ist. Einer vermehrten Bildung feinkörniger Partikel kann beispielsweise dadurch begegnet werden, dass die Fließbettpartikel eine gewisse Abriebfestigkeit haben. Bei einem auf ein Trägermaterial aufgebrachten Katalysator wird Abriebsfestigkeit im wesentlichen durch das Trägermaterial bestimmt ist. Die Verwendung von abriebfesten (harten) Fließbettpartikeln führt andererseits jedoch auch zu einem verstärkten Verschleiß an Kühlrohren und Gaseinleitungsrohren zur Gaseinleitung in den Reaktor. Infolgedessen werden hierdurch hohe Reparaturkosten und reparaturbedingte Produktionsausfälle wahrscheinlich.

Es ist daher Aufgabe der vorliegenden Erfindung, ein Verfahren zur verbesserten Gaseinleitung in Fließbettreaktoren anzugeben, bei welchem mit einem möglichst geringen Aufwand insbesondere die durch Zermahlung des Katalysators und Austrag mit den Gasströmen bedingten Katalysatorverluste verringert werden können.

Diese Aufgabe wird durch ein Verfahren nach Anspruch 1 gelöst.

Vorteilhafte Ausgestaltungen der Erfindung sind in den Unteransprüchen angegeben. Insbesondere kann das Fließbett in einem Fließbettreaktor, bevorzugt in einem vertikalen Fließbettreaktor vorliegen. Dabei kann der Mantel des Reaktors als drucktragender Mantel zum Aufnehmen von dem Gas bzw. den Gasen und zumindest einem darin befindlichen Fließbett aus teilchenförmigen Feststoffen ausgebildet sein.

Das erfindungsgemässe Verfahren zum Einleiten von Gas ist hierbei dadurch gekennzeichnet, dass das oder die Gaseinleitungsrohre eine Verwirbelung des transportierten Gasstroms bewirken.

Überraschenderweise hat sich gezeigt, dass die Zermahlung des Katalysators durch eine einfache Modifikation der üblicherweise verwendeten Gaseinleitungsrohre, durch welche der in den Gaseinleitungsrohren transportierte Gasstrom verwirbelt wird, drastisch verringert werden kann. Eine solche Verwirbelung des Gasstroms hat vermutlich zur Folge, dass sich das Geschwindigkeitsprofil des aus dem Gaseinleitungsrohr austretenden Gasstroms zugunsten eines Anstiegs des Volumenstroms in Rohrwandnähe ändert. Beispielsweise treten die verwirbelten Gasströme mit einem über den Gaseinleitungsrohrquerschnitt annähernd konstanten Geschwindigkeitsprofil aus den Gaseinleitungsrohren aus.

Falls die Gaseinleitungsrohre unterhalb des Fließbetts angeordnet sind, wird durch die Verwirbelung des Gasstroms und die dadurch bedingte Modifizierung des Geschwindigkeitsprofils des Volumenstroms weitgehend oder vollständig verhindert, dass Fließbettpartikel an den Rändern des/der Gaseinleitungsrohre in diese hineinfallen und dort unter Bildung feinkörniger Partikel, welche aus dem Reaktor ausgetragen werden können, zermahlen werden. In vorteilhafter Weise kann also eine Verminderung der Staubaustrags erreicht werden.

Falls die Gaseinleitungsrohre oberhalb des Fließbetts angeordnet sind, hat sich gezeigt, dass auch in diesem Fall die Staubbildung und der Staubaustrag vermindert werden. Insbesondere kann dadurch auch eine Verminderung des Verschleißes an Gas- und Kühlrohren erzielt werden. Hierfür ist die Ursache vermutlich darin zu finden, dass die Gasblasen beim Ausströmen des Gasstroms nicht unmittelbar nach oben gelenkt werden.

Bei einer vorteilhaften Ausführungsform der Erfindung wird eine Verwirbelung des in den Gaseinleitungsrohren transportierten Gasstroms dadurch bewirkt, dass die Gasverwirbelungsmittel - insbesondere an ihrem austrittseitigen Ende - eine Verengung oder Erweiterung des Rohrlumens bilden. Diese Verengung kann beispielsweise in Form einer zumindest teilweise auf dem Innenumfang des Gaseinleitungsrohrs angeordneten z.B. ringförmigen Wulst vorliegen. Gleichermaßen kann die Verengung oder Erweiterung des Rohrlumens in Form eines auf dem Innenumfang angeordneten Gewindes vorliegen. Als besonders vorteilhaft hat sich erwiesen, wenn die Verengung mit wenigstens einer Kante, insbesondere einer scharfen Kante, versehen wird, weil hierdurch die Verwirbelung des Gasstroms begünstigt wird. Ferner oder zusätzlich können die Gasverwirbelungsmittel mindestens ein Sieb und/oder mindestens ein Turbulenzgitter und/oder mindestens eine Lochblende aufweisen. Die Gasverwirbelungsmittel können an der Mündung des oder der Gaseinleitungsrohre und/oder in Strömungsrichtung vor der Mündung des oder der Gaseinleitungsrohre angeordnet sein.

Die Erfindung wird nun anhand der Beschreibung eines Ausführungsbeispiels näher erläutert, wobei Bezug auf die beigefügten Zeichnungen genommen wird.
- Fig. 1: zeigt eine schematische Ansicht eines Fließbettreaktors mit herkömmlichen Gaseinleitungsrohren zum Einleiten von Gasströmen in das Fließbett;
- Fig. 2: zeigt eine schematische Ansicht eines Fließbettreaktors mit Gaseinleitungsrohren zum Einleiten von Gasströmen in das Fließbett gemäß vorliegender Erfindung.

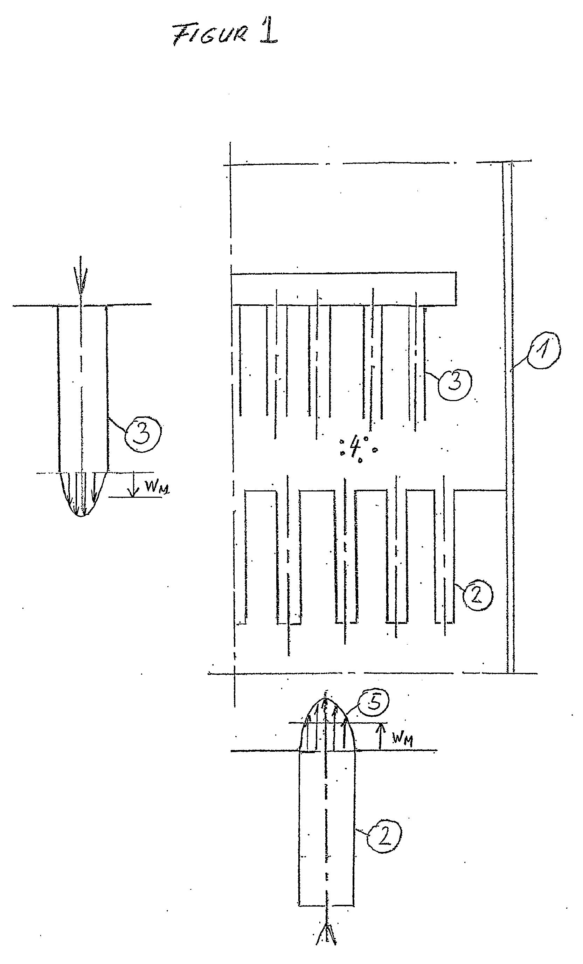

Zunächst sei Fig. 1 betrachtet. Fig. 1 zeigt einen Fließbettreaktor mit einer druckfesten Hülle 1, einem Fließbett 4 und einer darin befindlichen Vorrichtung zum Einleiten von Gas in den Reaktor. Die Vorrichtung zum Einleiten von Gas umfasst eine oberhalb des Fließbetts 4 angeordnete Mehrzahl von Gaseinleitungsrohren 3 zum Einleiten von Gasströmen von oben her in das Fließbett 4, sowie eine unterhalb des Fließbetts 4 angeordnete Mehrzahl von Gaseinleitungsrohren 2, zum Einleiten von Gasströmen von unten her in das Fließbett 4. Wie in den beiden vergrößerten Darstellungen der oberhalb und unterhalb des Fließbetts 4 angeordneten Gaseinleitungsrohre schematisch dargestellt ist, stellt sich bei den im Stand der Technik üblichen Gaseinleitungsrohren über die Rohrquerschnittsfläche ein im wesentlichen parabolisches Geschwindigkeitsprofil des Gasstroms ein. Der in Fig. 1 dargestellte Reaktor weist einen Durchmesser von 28 cm und eine Höhe von 2,3 m auf.

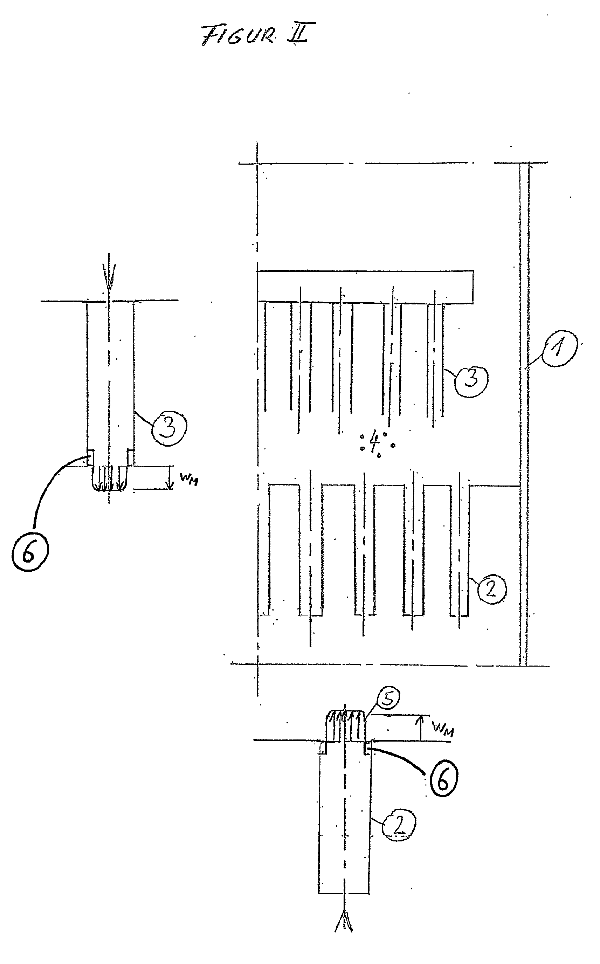

Im weiteren sei Fig. 2 betrachtet. Fig. 2 zeigt einen Fließbettreaktor mit Gaseinleitungsrohren zum Einleiten von Gasströmen benutzt in einem Verfahren gemäß vorliegender Erfindung, wobei ein Unterschied zu dem in Fig. 1 dargestellten Reaktor darin zu sehen ist, dass die Gaseinleitungsrohre der Vorrichtung zum Einleiten von Gasströmen von Fig. 2 erfindungsgemäß zur Verwirbelung des Gasstroms mit einer Verengung des Rohrlumens versehen sind. Die Gaseinleitungsrohre 2, 3 weisen zu diesem Zweck eine an ihrem austrittsseitigen Ende auf dem Innenumfang angeordnete ringförmige Wulst 6 auf. Wie in den beiden vergrößerten Darstellungen der oberhalb und unterhalb des Fließbetts 4 angeordneten Gaseinleitungsrohre schematisch dargestellt ist, wird durch die ringförmige Wulst 6 eine Abflachung des bei den Rohren im Stand der Technik bekannten parabolischen Geschwindigkeitsprofils zugunsten einer Zunahme der Gasstromgeschwindigkeit in der Nähe des Rohrrandes erreicht. Insbesondere ist das Geschwindigkeitsprofil des aus einem Gaseinleitungsrohr austretenden Gasstroms über den Querschnitt des Gaseinleitungsrohrs im wesentlichen konstant.

Der Fließbettreaktor von Fig. 2 ist zur Oxichlorierung von Ethen besonders geeignet, welche nun beispielhaft beschrieben werden soll.

Unter Oxichlorierung versteht man generell die Umsetzung eines Alkens - hier Ethen - mit Chlorwasserstoff und Sauerstoff oder einem Sauerstoff enthaltenden Gas wie Luft, unter Bildung eines gesättigten chlorierten Alkans - hier 1,2-Dichlorethan, im folgenden "EDC" genannt, nach der Gleichung:

C₂H₄ + 2 HCl +1/2 O₂ --> Cl-CH₂-CH₂-Cl + H₂O

Für diese Reaktion wird z.B. ein Katalysator in Form von auf Aluminiumoxidpartikel aufgebrachtem Kupfer(II)chlorid verwendet. Die Katalysatorteilchen haben z.B. einen mittleren Korndurchmesser von etwa 50 *µ*m, mit einem Kornbereich von 20 - 120 *µ*m. Die Teilchendichte beträgt ungefähr 1600 kg/m3. Die Katalysatorteilchen bilden durch die Anströmung mit Kreisgas und Reaktionsgas ein Fließbett.

In den erfindungsgemäßen Verfahren von Fig. 2 werden die auf 150°C aufgewärmten Reaktanden gasförmig eingeleitet.

Hierbei strömt eine Mischung aus 63 Nm3/h Chlorwasserstoff und 17 Nm3/h Sauerstoff durch die oberhalb des Fließbetts 4 angeordneten Gaseinleitungsrohre 3 in das Katalysatorfließbett 4. Eine Mischung aus 32 Nm3/h Ethen und 60 Nm3/h Kreisgas strömt von unten durch die Gaseinleitungsrohre 2 mit einer Temperatur von 150°C und einem Druck von 4,7 bar in das Katalysatorfließbett 4. Die mittlere Strömungsgeschwindigkeit in den Gaseinleitungsrohren 2 beträgt 1,3 m/s, in den Gaseinleitungsrohren 3 beträgt diese 1,0 m/s.

Im unteren Teil des Fließbetts 4 werden die über den Reaktorquerschnitt verteilten Reaktanden in der sogenannten Mischzone gemischt und reagieren exotherm am Katalysator. Die dabei auftretende Reaktionswärme von 238,5 KJ/mol wird über Kühlrohre (nicht gezeigt) an einen Wärmeträger abgeführt. Die Reaktionstemperatur beträgt 232°C, bei einem Reaktionsdruck von 4,2 bar.

Wie Messungen der Menge der Fließbettpartikel vor und nach der Umsetzung ergeben haben, beträgt der Verlust an Katalysator durch Zermahlen und Austrag von Katalysatorpartikel durch abströmendes Gas pro t EDC ungefähr 7,6 g.

### Vergleichsbeispiel

Zum Vergleich wird die Oxichlorierung von Ethen zu EDC bei ansonsten gleichen Bedingungen in dem herkömmlichen Fließbettreaktor von Fig. 1 durchgeführt. Wie Messungen der Menge der Fließbettpartikel ergeben haben, beträgt der Verlust an Katalysator pro t EDC ungefähr 48 g, also ca. die 7-fache Menge des Verlusts wie bei einem Fließbettreaktor gemäß vorliegender Erfindung.

## Patentansprüche

1. Verfahren zur Herstellung von 1,2-Dichlorethan mittels eines Fliessbettreaktors, der mit einer Vorrichtung zum Einleiten von Gas in ein Fliessbett mit unterhalb und oberhalb des Fliessbetts befindlichen Gaseinleitungsrohren (2,3) ausgestattet ist,
wobei die Gaseinleitungsrohre (2,3) an ihrer Mündung Gasverwirbelungsmittel aufweisen,
bei welchem Verfahren Ethen, Sauerstoff und/oder Chlorwasserstoff in das einen Katalysator aufweisende Fliessbett eingeleitet werden,
**dadurch gekennzeichnet,**
**dass** bei den unterhalb des Fliessbetts (4) angeordneten Gaseinleitungsrohren (2) der Gasstrom mit einer mittleren Austrittsgeschwindigkeit im Bereich von 0,5 bis 10 m/s austritt.

2. Verfahren nach Anspruch 1, **dadurch gekennzeichnet, dass** bei den unterhalb des Fliessbetts (4) angeordneten Gaseinleitungsrohren (2) der Gasstrom mit einer mittleren Austrittsgeschwindigkeit im Bereich von 3 bis 6 m/s austritt.

3. Verfahren nach Anspruch 1, **dadurch gekennzeichnet, dass** bei den oberhalb des Fliessbetts (4) angeordneten Gaseinleitungsrohren (3) der Gasstrom mit einer mittleren Austrittsgeschwindigkeit im Bereich von 0,7 bis 10 m/s austritt.

4. Verfahren nach Anspruch 1, **dadurch gekennzeichnet, dass** bei den oberhalb des Fliessbetts (4) angeordneten Gaseinleitungsrohren (3) der Gasstrom mit einer mittleren Austrittsgeschwindigkeit im Bereich von 2 bis 5 m/s austritt.

5. Verfahren nach einem der vorhergehenden Ansprüche, **dadurch gekennzeichnet, dass** die Gasverwirbelungsmittel mindestens eine Verengung oder Erweiterung des Rohrlumens bilden.

6. Verfahren nach Anspruch 5, **dadurch gekennzeichnet, dass** die Verengung wenigstens eine Kante aufweist.

7. Verfahren nach einem der vorhergehenden Ansprüche, **dadurch gekennzeichnet, dass** die Gasverwirbelungsmittel zumindest teilweise aus einem Gewinde bestehen.

8. Verfahren nach einem der vorhergehenden Ansprüche, **dadurch gekennzeichnet, dass** die Gasverwirbelungsmittel mindestens eine Wulst (6) aufweisen.

9. Verfahren nach einem der vorhergehenden Ansprüche, **dadurch gekennzeichnet, dass** die Gasverwirbelungsmittel mindestens ein Sieb, mindestens ein Turbulenzgitter und/oder mindestens eine Lochblende aufweisen.

## Claims

1. Process for the production of 1,2-dichloroethane by means of a fluidised bed reactor which is provided with a device for introducing gas into a fluidised bed, having gas inlet pipes (2, 3) located underneath and above the fluidised bed,
wherein the gas inlet pipes (2, 3) have gas-swirling means at their mouth,
in which process ethene, oxygen and/or hydrogen chloride are introduced into the fluidised bed having a catalyst,
**characterized in that**,
in the case of the gas inlet pipes (2) arranged underneath the fluidised bed (4), the gas current is discharged at an average discharge velocity in the range of from 0.5 to 10 m/s.

2. Process according to claim 1, **characterised in that** in the case of the gas inlet pipes (2) arranged underneath the fluidised bed (4), the gas current is discharged at an average discharge velocity in the range of from 3 to 6 m/s.

3. Process according to claim 1, **characterised in that** in the case of the gas inlet pipes (3) arranged above the fluidised bed (4), the gas current is discharged at an average discharge velocity in the range of from 0.7 to 10 m/s.

4. Process according to claim 1, **characterised in that** in the case of the gas inlet pipes (3) arranged above the fluidised bed (4), the gas current is discharged at an average discharge velocity in the range of from 2 to 5 m/s.

5. Process according to any one of the preceding claims, **characterised in that** the gas-swirling means form at least one narrowing or widening of the pipe lumen.

6. Process according to claim 5, **characterised in that** the narrowing has at least one edge.

7. Process according to any one of the preceding claims, **characterised in that** the gas-swirling means consist at least in part of a thread.

8. Process according to any one of the preceding claims, **characterised in that** the gas-swirling means have at least one bead (6).

9. Process according to any one of the preceding claims, **characterised in that** the gas-swirling means have at least one screen, at least one turbulence grid and/or at least one perforated diaphragm.

## Revendications

1. Procédé servant à produire du 1,2-dichloréthane au moyen d'un réacteur à lit fluidisé, qui est équipé d'un dispositif servant à introduire du gaz dans un lit fluidisé par des tubes d'arrivée de gaz (2, 3) se trouvant en dessous et au-dessus du lit fluidisé,
sachant que les tubes d'arrivée de gaz (2, 3) présentent, au niveau de leur embouchure, des moyens de tourbillonnement de gaz,
dans le cadre duquel procédé de l'éthylène, de l'oxygène et/ou du chlorure d'hydrogène sont introduits dans le lit fluidisé présentant un catalyseur,
**caractérisé en ce**
**qu'**en présence de tubes d'arrivée de gaz (2) disposés en dessous du lit fluidisé (4), le flux de gaz sort à une vitesse de sortie moyenne comprise dans la plage allant de 0,5 à 10 m/s.

2. Procédé selon la revendication 1, **caractérisé en ce qu'**en présence de tubes d'arrivée de gaz (2) disposés en dessous du lit fluidisé (4), le flux de gaz sort à une vitesse de sortie moyenne comprise dans la plage allant de 3 à 6 m/s.

3. Procédé selon la revendication 1, **caractérisé en ce qu'**en présence de tubes d'arrivée de gaz (3) disposés au-dessus du lit fluidisé (4), le flux de gaz sort à une vitesse de sortie moyenne comprise dans la plage allant de 0,7 à 10 m/s.

4. Procédé selon la revendication 1, **caractérisé en ce qu'**en présence de tubes d'arrivée de gaz (3) disposés au-dessus du lit fluidisé (4), le flux de gaz sort à une vitesse de sortie moyenne comprise dans la plage allant de 2 à 5 m/s.

5. Procédé selon l'une quelconque des revendications précédentes, **caractérisé en ce que** les moyens de tourbillonnement de gaz forment au moins un rétrécissement ou un élargissement du lumen de tube.

6. Procédé selon la revendication 5, **caractérisé en ce que** le rétrécissement présente au moins une arête.

7. Procédé selon l'une quelconque des revendications précédentes, **caractérisé en ce que** les moyens de tourbillonnement de gaz sont constitués au moins en partie d'un filetage.

8. Procédé selon l'une quelconque des revendications précédentes, **caractérisé en ce que** les moyens de tourbillonnement de gaz présentent au moins un bourrelet (6).

9. Procédé selon l'une quelconque des revendications précédentes, **caractérisé en ce que** les moyens de tourbillonnement de gaz présentent au moins un tamis, au moins une grille de turbulence et/ou au moins un diaphragme percé.
